# EUROPÄISCHE PATENTSCHRIFT

(11) **EP 1 243 467 B1**
(45) Veröffentlichungstag und Bekanntmachung des Hinweises auf die Patenterteilung: **26.10.2005**
(21) Anmeldenummer: 02005818.6
(22) Anmeldetag: 14.03.2002
(51) Int. Cl.: B60Q 1/00, F21S 8/12

(54) **Scheinwerfer für Fahrzeuge**
Vehicle headlamp
Phare de véhicule

(30) Priorität: 22.03.2001 DE 10114123
(43) Veröffentlichungstag der Anmeldung: 25.09.2002
(73) Patentinhaber: Hella KGaA Hueck & Co., 59552 Lippstadt (DE)
(72) Erfinder: Spieker, Thomas, 59590 Geseke (DE); Reichelt, Christoph, 59558 Lippstadt (DE); Hering, Hubertus, 59457 Werl (DE); Cramer, Herbert, 59602 Rüthen (DE)

(56) Entgegenhaltungen:
- EP-A- 1 078 816
- DE-A- 10 040 302
- DE-A- 19 704 467
- FR-A- 2 813 654
- GB-A- 2 245 697
- US-A- 4 249 234

## Beschreibung

Die Erfindung betrifft einen Scheinwerfer für Fahrzeuge mit mindestes einem im Inneren des Scheinwerfers angeordneten Projektionsmodul, welches einen schalenförmigen Reflektor, eine im Inneren des Reflektors angeordneten Lichtquelle, eine das Licht des Reflektors sammelnde Linse und eine zwischen Linse und Reflektor angeordnete Blende aufweist, und mit einem die Linse umgebenden Lichtleitring, der eine dem Reflektor abgewandte vordere ringförmige Lichtauskoppelfläche für Positionslicht aufweist.

Ein gattungsgemäßer Scheinwerfer ist aus der GB 2 245 697 A bekannt.

Aus der DE 35 18 265 A1 ist ein Scheinwerfer für Fahrzeuge bekannt, bei dem ein Lichtleitstab für Positionslicht seitlich neben einem Projektionsmodul angeordnet ist. Der Lichtleitstab verläuft mit seiner Längsachse parallel zu der optischen Achs des Projektionsmoduls und erstreckt sich von der Rückseite eines Scheinwerfergehäuses bis zu einer das Scheinwerfergehäuse abschließenden Abschlussscheibe. In einer Rückwand des Scheinwerfergehäuses ist eine Glühlampe benachbart zu einer Lichteinkoppelfläche des Lichtleitstabes angeordnet, während der Lichtleitstab an seinem zur Abschlussscheibe weisenden freien Ende eine Lichtauskoppelfläche aufweist. Für einen Betrachter ist bei eingeschalteten Positionslicht nur eine ungewohnt kleine Lichtaustrittsfläche für Positionslicht zu sehen.

Bei dem aus der EP 0900 694 A2 bekannten Scheinwerfer umgibt ein Lichtleitring für Positionslicht einen schalenförmigen Reflektor und weist auf der zur Abschlussscheibe weisenden Seite eine Lichtauskoppelfläche auf. Es sind auch Scheinwerfer für Fahrzeuge bekanntgeworden, bei denen der Lichtleitring die Linse eines Projektionsmoduls umgibt. Bei beiden Ausführungen ist bei eingeschalteten Positionslicht nur eine schmale ringförmige Lichtaustrittsfläche zu sehen.

Aufgabe der Erfindung ist es, den im Oberbegriff des Anspruchs 1 beschriebenen Scheinwerfer derart zu verbessern, dass für einen Betrachter sowohl die Lichtabstrahlfläche des Scheinwerfers für Positionslicht als auch für Abblendlicht großflächiger erscheint. Diese Aufgabe wird nach der Erfindung dadurch gelöst, dass der Lichtleitring eine dem Reflektor des Projektionsmoduls zugewandte rückwärtige Lichtauskoppelfläche aufweist, dem eine Reflexionsfläche eines die Linse umgebenden ringförmigen Reflektors zugewandt ist. Bei Abblendlicht ist die Licht abstrahlende Linse, auf die das von dem Reflektor des Projektionsmoduls reflektierten Lichtstrahlen auftreffen, von dem aufgehellten Lichtleitring und dem die Linse umgebenden aufgehellten kreisringförmigen Reflektor umgeben. Für einen entgegenkommenden Fahrer scheint somit das Abblendlicht nicht aus einer kleine störenden Lichtaustrittsfläche, die von der Linse gebildet ist, sondern, wie üblich, aus einer großen Lichtaustrittsfläche der Scheinwerfers zu kommen. Bei ausgeschalteten Abblendlicht besteht für das Positionslicht eine von Lichtleitring und ringförmigen Reflektor gebildete großflächige kreisringförmige Lichtaustrittsfläche.

Der Scheinwerfer weist im Bereich der Linse ein homogenes Aussehen auf, wenn der Lichtleitring in einem ringförmigen verlaufenden Brennort des Reflektors angeordnet ist, dessen Reflexionsfläche das aus der rückwärtigen Lichtauskoppelfläche sammelt und in Lichtaustrittsrichtung des Scheinwerfers umlenkt, wobei der ringförmige Reflektor mit seinem inneren Rand benachbart zum äußeren sphärischen Randbereich der Linse und mit seinem äußeren Rand näher zum Reflektor des Projektionsmoduls beabstandet verläuft und der Lichtleitring den äußeren Rand der Reflektors abdeckt. Wegen der Anordnung des Lichtleitrings benachbart zum äußeren Rand des ringförmigen Reflektors sind seine Lichtauskoppelflächen besonders groß. In diesem Zusammenhang ist es weiterhin vorteilhaft, wenn zwischen dem Lichtleitring und dem äußeren Rand des Reflektors ein zylindrisches Reflektorelement mit einer dem Reflektor zugewandten Reflexionsfläche, welche die aus der rückwärtigen Lichtauskoppelfläche austretenden und auf sie auftreffenden Lichtstrahlen zum das Licht sammelnden Reflektor umlenkt. Dadurch werden sämtliche aus der rückwärtigen Lichtauskoppelfläche austretenden Lichtstrahlen von dem Reflektor gesammelt. Hierbei ist es vorteilhaft, wenn das Reflektorelement zusätzlich ein Halteelement für den Lichtleitring ist und das Reflektorelement einstückig mit einem den Lichtleitring bzw. den ringförmigen Reflektor umgebenden Abdeckrahmen ausgeführt ist.

Bei einer besonders vorteilhaften Weiterbildung der Erfindung ist zwischen der Linse und der Blende ein Lichtelement für Positionslicht angeordnet ist, dessen Lichtstrahlen zur Blende hin gerichtet sind, wobei die Blende auf der der Linse zugewandten Seite eine Reflexionsfläche aufweisen, welche die aus dem Lichtelement austretenden Lichtstrahlen zur Linse hin umlenkt und die Linse aufhellt. Dadurch besteht für Positionslicht auf der Scheinwerfervorderansicht eine große zusammenhängende leuchtende Fläche, die von dem Lichtleitring, dem ringförmigen Reflektor und der aufgehellten Linse gebildet ist. Erst dadurch können Gesetzesvorschriften erfüllt sein.

Weiterhin ist es vorteilhaft, wenn das Lichtelement von der Lichtauskoppelfläche eines flexiblen Lichtleiters gebildet ist, wobei der flexible Lichtleiter und der Lichtleitring über flexible Lichtleiter mit einem Lichtmodul verbunden sind. Dadurch ist für den Lichtleitring und das Lichtelement nur eine einzige Lichtquelle notwendig. Hierbei ist es weiterhin vorteilhaft, wenn das Lichtelement, die flexiblen Lichtleiter und das Lichtmodul zusammen mit dem Projektionsmodul von einem Tragelement gehaltert sind. An dem Tragelement kann auch ein schalenförmiger Reflektor befestigt sein, der für Fernlicht dient und von einem weiteren Lichtleitring für Positionslicht umgeben ist.

Ein Ausführungsbeispiel der Erfindung wird nachfolgend anhand der Zeichnung erläutert.

Es zeigen:

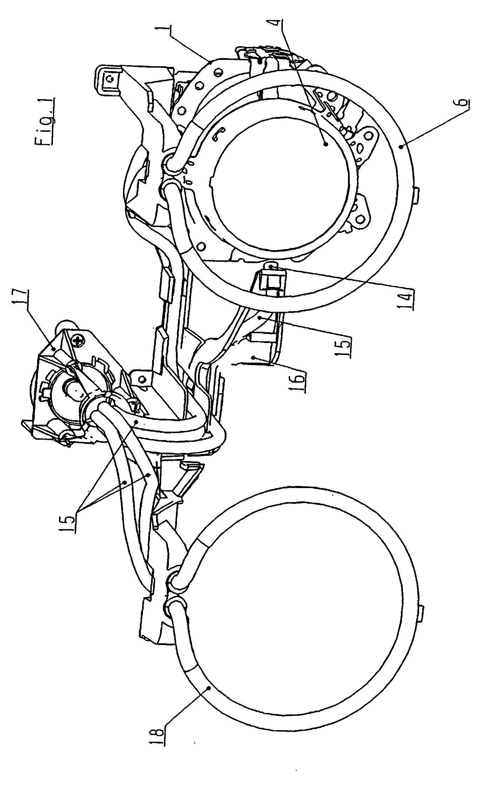

- Figur 1: eine räumliche Darstellung von im Inneren eines Scheinwerfers für Fahrzeuge angeordneten Bauteilen,

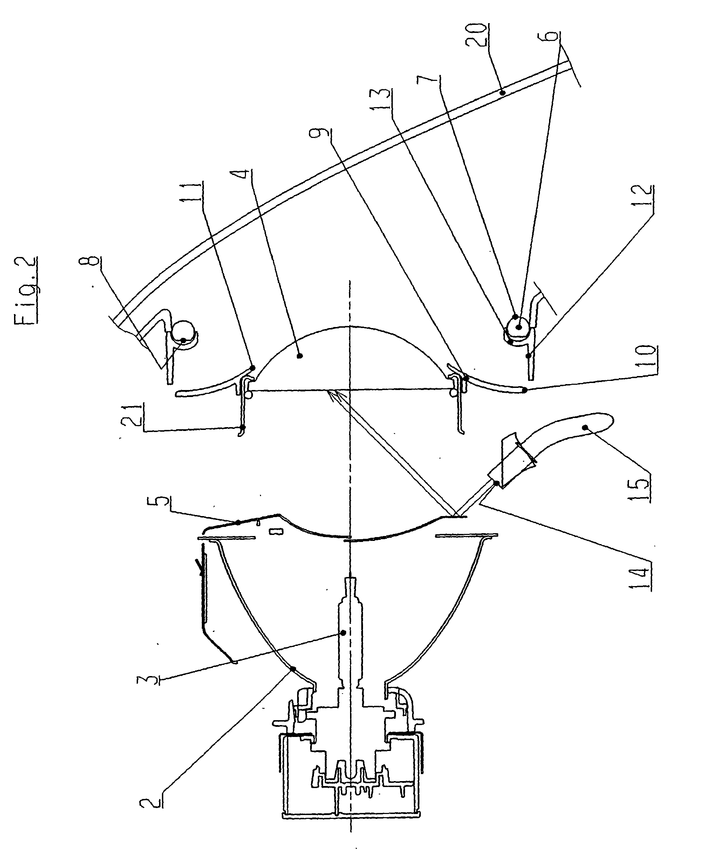

- Figur 2: einen vertikalen Schnitt durch ein Projektionsmodul des Scheinwerfers nach Figur 1 und

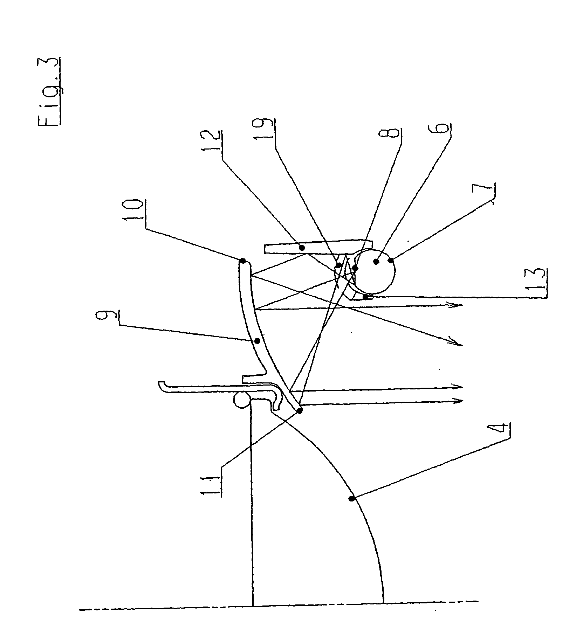

- Figur 3: eine Einzelheit des Projektionsmoduls nach Figur 2 in vergrößerter Darstellung.

Ein Scheinwerfer für Fahrzeuge weist ein Projektionsmodul 1 auf. In einem nicht dargestellten Gehäuse ist das Projektionsmodul 1 von einem Tragelement 16 gehaltert. Das Tragelement 18 ist in dem Gehäuse einstellbar und schwenkbar gelagert. Die vordere offene Seite des Gehäuses ist durch eine lichtdurchlässige Abschlussscheibe 20 abgedeckt. Das Projektionsmodul 1 besteht aus einem ellipsoidförmigen Reflektor 2, einer im inneren Brennort des Reflektors 2 angeordneten Lichtquelle 3, einer im Lichtstrahlengang des Reflektors 2 angeordneten Linse 4 und mindestens einer zwischen Linse 4 und Reflektor 2 angeordneten Blende 5. Als Lichtquelle 3 dient eine Glüh- bzw. Gasentladungslampe, welche in eine in den Scheitelbereich des Reflektors 2 eingebrachte Öffnung eingesetzt ist. Die Linse 4 ist von einem an dem vorderen Rand des Reflektors 2 befestigten Haltegestell 21 getragen und von einem kreisringförmigen Reflektor 9 umgeben. Der kreisringförmige Reflektor 9 grenzt mit seinem inneren Rand 11 an den äußeren Randbereich der konvexen Vorderseite der Linse 4 an, während sein äußerer Rand 10 näher zum Reflektor 2 des Projektionsmodul 1 angeordnet ist. Somit bildet der kreisringförmige Reflektor 9 zusammen mit der Vorderseite der Linse 4 eine konvexe Fläche, wobei diese zwischen dem inneren Rand 11 des Reflektors 9 und der Linse 2 eine umlaufende Stufe aufweist. Dadurch besteht im Bereich der Linse 2 ein homogener Eindruck. Entgegen der Lichtaustrittsrichtung des Scheinwerfers gesehen deckt ein Lichtleitring 6 den äußeren Rand 10 des kreisringförmigen Reflektors 9 ab. Der Lichtleitring 6 ist an einem radial nach innen ragenden Träger 13 eines zylindrischen Reflektorelements 12 befestigt. Das zylindrische Reflektorelement 12 und der kreisringförmige Reflektor 9 stehen in allen Längsschnitten durch das Projektionsmodul 1 in einem spitzen Winkel zueinander, wobei die Reflexionsfläche des Reflektors 9 in den Längsschnitten konkav und die dem Reflektor 9 zugewandte Reflexionsfläche des Reflektorelements 12 geradlinig verläuft. Der Lichtleitring 6 ist in einem ringförmigen Brennort des kreisringförmigen Reflektors 9 angeordnet. Der Lichtleitring 6 ist über flexible Lichtleiter 15 mit einem von dem Tragelement 16 gehalterten Lichtmodul 17 verbunden. Der Lichtleitring 17 weist eine vordere und rückwärtige Lichtauskoppelfläche 7 bzw. 8 auf. Bei eingeschalteten Lichtmodul 17 gehen die aus der rückwärtigen Lichtauskoppelfläche 8 austretenden Lichtstrahlen durch Freiräume 19, die von Durchgangsöffnungen des Trägers 13 gebildet sind hindurch und treffen auf den kreisringförmigen Reflektor 9 auf, der diese sammelt und in Lichtaustrittsrichtung des Scheinwerfers reflektiert. Die auf die Reflexionsfläche des zylindrischen Reflektorelements 12 auftreffenden Lichtstrahlen lenkt diese zum Reflektor 9 hin. Der Lichtleitring 6 dient zur Erzeugung des Positionslichts oder bei eingeschalteten Projektionsmodul 1 zur Umfeldaufhellung der stark aufgehellten Linse 4. Seitlich neben dem Projektionsmodul 1 ist ein weiterer Lichtleitring 18 angeordnet, der über einen flexiblen Lichtleiter 15 mit dem Lichtmodul 17 verbunden ist und einen nicht dargestellten Fernlichtreflektor umgibt. Der Lichtleitring 18 dient ebenfalls zur Erzeugung des Positionslichts. Zwischen der Linse 4 und dem Reflektor 2 der Projektionsmoduls 1 ist ein Lichtelement 14 angeordnet, das von einer Lichtauskoppelfläche eines mit dem Lichtmodul 17 verbundenen flexiblen Lichtleiters 15 gebildet ist. Aus dem Lichtelement 14 austretende Lichtstrahlen treffen auf eine Reflexionsfläche der Blende 5 auf, durch welche diese zur Linse 4 hin umgelenkt werden. Dadurch ergibt sich bei Positionslicht eine große leuchtende Fläche, die von dem Lichtleitring 6 begrenzt ist.

## Patentansprüche

1. Scheinwerfer für Fahrzeuge mit mindestes einem im Inneren des Scheinwerfers angeordneten Projektionsmodul (1), welches eine schalenförmigen Reflektor (2), eine im Inneren des Reflektors (2) angeordneten Lichtquelle (3), eine das Licht des Reflektors (2) sammelnde Linse (4) und eine zwischen Linse (4) und Reflektor (2) angeordnete Blende (5) aufweist, und mit einem die Linse (4) umgebenden Lichtleitring (6), der eine dem Reflektor (2) abgewandte vordere Lichtauskoppelfläche (7) für Positionslicht aufweist, **dadurch gekennzeichnet, dass** der Lichtleitring (6) eine dem Reflektor (2) des Projektionsmoduls (1) zugewandte rückwärtige Lichtauskoppelfläche (8) aufweist, dem eine Reflexionsfläche eines die Linse (4) umgebenden ringförmigen Reflektors (9) zugewandt ist.

2. Scheinwerfer nach Anspruch 1, **dadurch gekennzeichnet, dass** der Lichtleitring (6) entgegen der Lichtaustrittsrichtung gesehen den äußeren Rand (10) des ringförmigen Reflektors (9) abdeckt.

3. Scheinwerfer nach Anspruch 2, **dadurch gekennzeichnet, dass** der Lichtleitring (6) in einem ringförmigen verlaufenden Brennort des Reflektors (9) angeordnet ist, dessen Reflexionsfläche das aus der rückwärtigen Lichtauskoppelfläche (8) sammelt und in Lichtaustrittsrichtung des Scheinwerfers umlenkt, wobei der ringförmige Reflektor (9) mit seinem inneren Rand (11) benachbart zum äußeren konvexen Randbereich der Linse (4) und mit seinem äußeren Rand (10) näher zum Reflektor (2) des Projektionsmoduls (1) beabstandet verläuft.

4. Scheinwerfer nach einem der Ansprüche 1 bis 3, **dadurch gekennzeichnet, dass** zwischen dem Lichtleitring (6) und dem äußeren Rand (10) des Reflektors (9) ein zylindrisches Reflektorelement (12) mit einer dem Reflektor (9) zugewandten Reflexionsfläche, welche die aus der rückwärtigen Lichtauskoppelfläche (8) austretenden und auf sie auftreffenden Lichtstrahlen zum das Licht sammelnden Reflektor (9) umlenkt.

5. Scheinwerfer nach Anspruch 4, **dadurch gekennzeichnet, dass** zylindrische Reflektorelement (12) ein den Lichtleitring (6) tragendes Halteelement ist.

6. Scheinwerfer nach Anspruche 5, **dadurch gekennzeichnet, dass** das zylindrische Reflektorelement (12) an mindestens einem radial von dem Halteelement abstehenden Träger (13) befestigt ist und der Träger (13) mindestens einen Freiraum (19) aufweist, der als Lichtdurchlassöffnung für die aus der rückwärtigen Lichtauskoppelfläche (8) austretenden Lichtstrahlen dienen.

7. Scheinwerfer nach einem der Ansprüche 1 bis 6, **dadurch gekennzeichnet, dass** zwischen der Linse (4) und der Blende (5) ein Lichtelement (14) für Positionslicht angeordnet ist, dessen Lichtstrahlen zur Blende (5) hin gerichtet sind, wobei die Blende (5) auf der der Linse (4) zugewandten Seite eine Reflexionsfläche aufweist, welche die aus dem Lichtelement (14) austretenden Lichtstrahlen zur Linse (4) hin umlenkt und die Linse (4) aufhellt.

8. Scheinwerfer nach Anspruch 7, **dadurch gekennzeichnet, dass** das Lichtelement (14) von einer Lichtauskoppelfläche eines flexiblen Lichtleiters (15) gebildet ist, der von einem Tragelement (16) getragen ist, welches das Projektionsmodul (1) haltert.

9. Scheinwerfer nach Anspruch 7 oder 8, **dadurch gekennzeichnet, dass** mindestens ein Lichtleitring (6) und das Lichtelement (14) über flexible Lichtleiter (15) mit ein und demselben Lichtmodul (17) verbunden sind.

10. Scheinwerfer nach einem der Ansprüche 1 bis 9, **dadurch gekennzeichnet, dass** ein weiterer Lichtleitring (18) einen schalenförmigen Reflektor, welcher benachbart zum Projektionsmodul (1) angeordnet ist, seinen äußeren Randbereich umgibt.

## Claims

1. Vehicle headlamp, comprising at least one projection module (1) arranged inside the headlamp and including a dished reflector (2), a light source (3) arranged in the interior of the reflector (2), a lens (4) collecting the light of the reflector (2) and a mask (5) arranged between the lens (4) and the reflector (2), and comprising a light guide ring (6) that surrounds the lens (4) and includes a front light coupling-out area (7) for position light oriented away from the reflector (2), **characterised in that** the light guide ring (6) includes a rear light coupling-out area (8) oriented towards the reflector (2) of the projection module (1), towards which rear light coupling-out area (8) is oriented a reflection face of an annular reflector (9) surrounding the lens (4).

2. Headlamp according to claim 1, **characterised in that** the light guide ring (6) covers the outer edge (10) of the annular reflector (9), viewed oppositely to the light exit direction.

3. Headlamp according to claim 2, **characterised in that** the light guide ring (6) is arranged in an annularly disposed focal area of the reflector (9), the reflection face of which collects the light emerging from the rear light coupling-out area (8) and deflects it in the light exit direction of the headlamp, the inner edge (11) of the annular reflector (9) being disposed adjacent to the outer convex edge portion of the lens (4) and the outer edge (10) of the annular reflector (9) being disposed at a distance and closer to the reflector (2) of the projection module (1).

4. Headlamp according to any one of claims 1 to 3, **characterised in that** a cylindrical reflector element (12) having a reflection face oriented towards the reflector (9) is arranged between the light guide ring (6) and the outer edge (10) of the reflector (9), which reflection face deflects the light rays emerging from the rear light coupling-out area (8) and impinging on said reflection face to the reflector (9) collecting the light.

5. Headlamp according to claim 4, **characterised in that** the cylindrical reflector element (12) is a retaining element carrying the light guide ring (6).

6. Headlamp according to claim 5, **characterised in that** the cylindrical reflector element (12) is fixed to at least one support (13) projecting radially from the retaining element and the support (13) includes at least one free space (19) which serves as a light transmission opening for the light rays emerging from the rear light coupling-out area (8).

7. Headlamp according to any one of claims 1 to 6, **characterised in that** there is arranged between the lens (4) and the mask (5) a light element (14) for position light, the light rays of which are directed towards the mask (5), the mask (5) having on the side oriented towards the lens (4) a reflection face which deflects the light rays emerging from the light element (14) to the lens (4) and illuminates the lens (4).

8. Headlamp according to claim 7, **characterised in that** the light element (14) is formed by a light coupling-out area of a flexible light guide (15) supported by a support element (16) which holds the projection module (1).

9. Headlamp according to claim 7 or 8, **characterised in that** at least one light guide ring (6) and the light element (14) are connected to one and the same light module (17) via flexible light guides (15).

10. Headlamp according to any one of claims 1 to 9, **characterised in that** a further light guide ring (18) surrounds the outer edge portion of a dished reflector which is arranged adjacent to the projection module (1).

## Revendications

1. Projecteur pour véhicule, comportant au moins un module de projection (1) agencé à l'intérieur du projecteur, module qui présente un réflecteur (2) en forme de coque, une source lumineuse (3) agencée à l'intérieur du réflecteur (2), une lentille (4) focalisant la lumière du réflecteur (2) et un diaphragme (5) agencé entre la lentille (4) et le réflecteur (2), et comportant un anneau à guide de lumière (6) entourant la lentille (4), lequel présente une surface de découplage de lumière avant (7) détournée du réflecteur (2) pour un feu de position, **caractérisé en ce que** l'anneau à guide de lumière (6) présente une surface de découplage de lumière arrière (8) tournée vers le réflecteur (2) du module de projection (1) et vers lequel est tournée une surface de réflexion d'un réflecteur (9) annulaire entourant la lentille (4).

2. Projecteur selon la revendication 1, **caractérisé en ce que**, vu dans le sens contraire à la sortie de la lumière, l'anneau à guide de lumière (6) recouvre le bord extérieur (10) du réflecteur (9) annulaire.

3. Projecteur selon la revendication 2, **caractérisé en ce que** l'anneau à guide de lumière (6) est agencé à un foyer du réflecteur (9), qui s'étend de forme annulaire, dont la surface de réflexion focalise la lumière provenant de la surface de découplage de lumière arrière (8) et la dévie en direction de la sortie de lumière du projecteur, le réflecteur (9) annulaire s'étendant avec son bord intérieur (11) au voisinage de la région de bord extérieur convexe de la lentille (4) et avec son bord extérieur (10) à distance plus proche du réflecteur (2) du module de projection (1).

4. Projecteur selon l'une des revendications 1 à 3, **caractérisé en ce que** entre l'anneau à guide de lumière (6) et le bord extérieur (10) du réflecteur (9) est prévu un élément de réflecteur cylindrique (12) avec une surface de réflexion tournée vers le réflecteur (9), laquelle dévie vers le réflecteur (9), qui focalise la lumière, les rayons lumineux sortant de la surface de découplage de lumière arrière (8) et incidents sur celle-ci.

5. Projecteur selon la revendication 4, **caractérisé en ce que** l'élément de réflecteur (12) cylindrique est un élément de retenue portant l'anneau à guide de lumière (6).

6. Projecteur selon la revendication 5, **caractérisé en ce que** l'élément de réflecteur (12) cylindrique est fixé sur au moins un support (13) faisant saillie radialement depuis l'élément de retenue, et le support (13) présente au moins un espace libre (19) qui sert d'ouverture de passage de lumière pour les rayons lumineux sortant hors de la surface de découplage de lumière arrière (8).

7. Projecteur selon l'une des revendications 1 à 6, **caractérisé en ce que** entre la lentille (4) et le diaphragme (5) est agencé un élément lumineux (14) pour un feu de position, dont les rayons lumineux sont orientés vers le diaphragme (5), le diaphragme (5) présentant sur la face tournée vers la lentille (4) une surface de réflexion qui dévie vers la lentille (4) les rayons lumineux sortant hors de l'élément lumineux (14) et qui éclaire la lentille (4).

8. Projecteur selon la revendication 7, **caractérisé en ce que** l'élément lumineux (14) est formé par une surface de découplage de lumière d'un guide de lumière (15) flexible qui est porté par un élément porteur (16) qui supporte le module de projection (1).

9. Projecteur selon l'une ou l'autre des revendications 7 et 8, **caractérisé en ce qu'**au moins un anneau à guide de lumière (6) et l'élément lumineux (14) sont reliés via des guides de lumière (15) flexibles à un seul et même module lumineux (17).

10. Projecteur selon l'une des revendications 1 à 9, **caractérisé en ce qu'**un autre anneau à guide de lumière (18) présente un réflecteur en forme de coque, qui est agencé au voisinage du module de projection (1), et entoure sa région de bord extérieur.
